Europäisches Patentamt

European Patent Office

Office européen des brevets

(19)

(11) Numéro de publication: **0 193 898**
**B1**

# FASCICULE DE BREVET EUROPEEN

(12)

(45) Date de publication du fascicule du brevet:
16.05.90

(51) Int. Cl.⁵: **A01F 12/00, A01D 41/12**

(21) Numéro de dépôt: **86102652.4**

(22) Date de dépôt: **28.02.86**

(54) **Récolteuse pour parcelles expérimentales.**

(30) Priorité: **06.03.85 FR 8503312**

(43) Date de publication de la demande:
**10.09.86 Bulletin 86/37**

(45) Mention de la délivrance du brevet:
**16.05.90 Bulletin 90/20**

(84) Etats contractants désignés:
**AT BE CH DE GB IT LI LU NL SE**

(56) Documents cités:
**DE-A- 2 658 820**
**FR-A- 2 532 519**
**GB-A- 2 087 704**
**US-A- 2 748 601**

(73) Titulaire: **INSTITUT TECHNIQUE DES CEREALES ET DES FOURRAGES, 8 Avenue du Président Wilson, F-75116 Paris(FR)**
Titulaire: **ASSOCIATION GENERALE DES PRODUCTEURS DE MAIS, 1 Place Samuel de Lestapis, F-64000 Pau(FR)**
Titulaire: **Ateliers ROLLAND S.A., 71, avenue Jean Jaurès, F-72500 Chateau du Loir (Sarthe)(FR)**

(72) Inventeur: **Cornet, Michel, 25, rue Georges Clémenceau, F-77210 Avon (Seine-et-Marne)(FR)**
Inventeur: **Michel, Pierre Route de la Vallée, Ormesson F-77140 St-Pierre Les Nemours, Seine-et-Marne(FR)**

(74) Mandataire: **Simonnot, Bernard et al, Cabinet Simonnot 35 rue de Clichy, F-75442 Paris Cédex 09(FR)**

ACTORUM AG

## Description

La présente invention concerne une récolteuse-hacheuse automotrice pour parcelles expérimentales de taille réduite, destinée notamment au ramassage de plantes fourragères, ladite récolteuse comprenant un ensemble de pesage et d'échantillonnage automatique.

On sait que les semis expérimentaux à récolter sont disposés en principe en bandes ou parcelles successives de 5 à 20 m de longueur ou plus, correspondant chacune à une variété ou à un traitement expérimental différent, par exemple au moyen de produits traitants différents ou employés à des doses différentes.

Chaque parcelle est séparée de la suivante par une allée de 0,5 m à 2,5 m. Des rangs de bordure hors essai devraient séparer entre elles les parcelles adjacentes. Seule la partie centrale doit donc être récoltée.

On peut ainsi être amené à récolter une rangée centrale sur trois rangs semés à 0,8 m d'écartement pour le maïs, ou récolter une bande de 1,5 m de largeur sur des parcelles de 2 à 2,5 m cultivées en espèces herbacées.

A l'heure actuelle, la récolte des parcelles expérimentales de petites et moyennes dimensions, soit 5 à 50 m² et plus se fait le plus souvent de façon discontinue en plusieurs phases successives : fauche - ramassage - pesée - échantillonnage - hachage, nécessitant un personnel nombreux et limitant la rapidité de récolte. La récolte des parcelles expérimentales de petites dimensions cultivées en maïs-fourrage se fait actuellement presque exclusivement à la main.

Par ailleurs, le matériel de culture standard ne permet pas de récolter des parcelles expérimentales de faible largeur, c'est-à-dire moins de 1,8 m et d'encombrement réduit.

On connaît par exemple, de par la demande de brevet français publiée No 2 532 519, une machine pour la récolte de parcelles d'expérimentation, consistant en un ensemble adaptable sur une machine de récolte pour grandes surfaces. Plus particulièrement, cet ensemble est destiné à effectuer une pesée des différents produits recueillis et, à cet effet, il est muni d'une trémie auxiliaire suspendue dans une trémie de stockage par l'intermédiaire de capteurs statiques appropriés, associés d'une part à un afficheur de poids et, d'autre part, à une commande de trappes inférieures de ladite trémie auxiliaire par un opérateur afin d'éliminer sans autre précaution les produits pesés.

Un tel agencement, bien que permettant une pesée de produits de parcelles d'expérimentation, ne constitue cependant qu'un ensemble auxiliaire à commande manuelle pour une machine non spécialisée et ne prévoit en rien ni le mode de récolte ni un quelconque échantillonnage des produits recueillis.

La présente invention vise donc à remédier aux inconvénients ci-dessus, en fournissant une récolteuse automotrice spécifique, étroite et courte, munie des organes nécessaires de hachage, de pesage et d'échantillonnage automatique, permettant d'opérer économiquement et de manière automatique et fiable.

Conformément à l'invention, la récolteuse, montée sur un véhicule automoteur muni d'un organe de ramassage et de hachage tel qu'un bec cueilleur, ledit organe formant un premier module, comprend un second module destiné au pesage et à l'échantillonnage relié au premier module par l'intermédiaire d'un conduit d'éjection et d'une trémie d'attente ouvrante dont la sortie est disposée au droit d'un convoyeur associé à un moyen de pesage et muni d'un égalisateur de la charge que transporte ledit convoyeur, la sortie dudit convoyeur débouche sur un ensemble échantillonneur associé à un poste de conditionnement d'échantillons à et une sortie d'évacuation du produit recueilli et non utilisé pour les échantillons, ledit ensemble échantillonneur comprenant une roue à palette disposée au-dessous de la sortie dudit convoyeur et destinée à dériver à partir du flot de produit recueilli se dirigeant vers la sortie d'évacuation des échantillons, qui sont dirigés par cette roue vers la poste de conditionnement.

De façon avantageuse, un premier poste de commande est relié au dispositif de mise en progression du véhicule ainsi qu'à la trémie ouvrante et au moyen de pesage, tandis qu'un second poste de commande est relié au convoyeur, à l'égalisateur et à l'échantillonneur.

D'autres caractéristiques et avantages de l'invention ressortiront mieux de la description qui va suivre, faite en regard des dessins annexés sur lesquels :

la figure 1 représente un schéma synoptique des différents organes constitutifs de la récolteuse selon l'invention, avec leurs postes de commande ;
la figure 2 représente une vue schématique de la récolteuse ; et
la figure 3 représente un tableau résumant les phases d'un cycle de fonctionnement de la récolteuse.

Sur ces dessins, les mêmes références désignent les mêmes éléments.

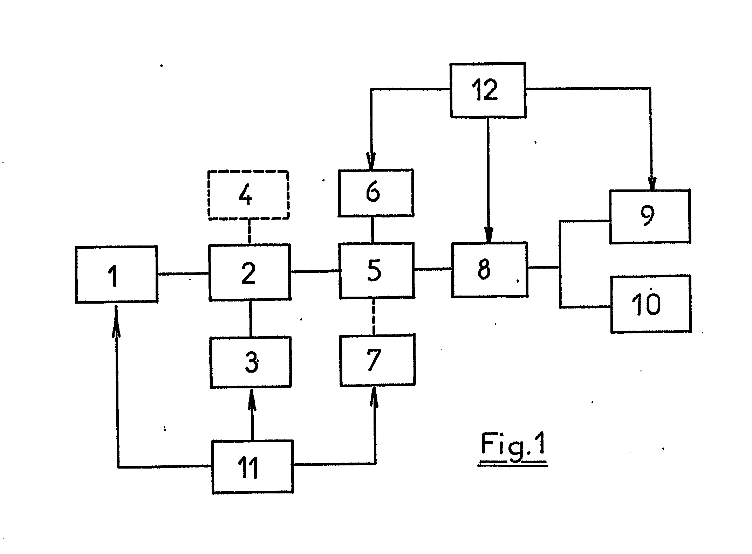

En se référant à la figure 1, la récolteuse selon l'invention, montée sur un véhicule automoteur (non représenté) comprend avantageusement deux modules séparables, l'un constitué par l'organe de ramassage et de hachage 1 connu en soi tel qu'un bec cueilleur ou un tablier avec barre de coupe, l'autre constitué par les organes de pesage et d'échantillonnage. La sortie de l'organe de ramassage et de hachage 1 est reliée à une trémie d'attente 2 ouvrante, munie de moyens d'ouverture 3 et éventuellement d'un moyen de pesage 4, et dont le contenu est recueilli sur un convoyeur 5 muni d'un égalisateur 6 de la charge qu'il transporte et avantageusement associé au moyen de pesage 7. La charge transportée par le convoyeur 5 et égalisée est envoyée sur un échantillonneur 8 conduisant à un poste 9 de conditionnement d'échantillons ainsi qu'à une sortie d'évacuation 10. Un premier poste de commande 11 à la disposition du conducteur de véhicule est relié à l'organe de ramassage-hachage 1, aux moyens d'ouverture 3 de la trémie et au moyen de pesage 7.

Un second poste de commande 12 à la disposition d'un opérateur est relié au convoyeur 5 et à son égalisateur 6, à l'échantillonneur 8 et au poste 9 de conditionnement ainsi qu'à la sortie d'évacuation 10.

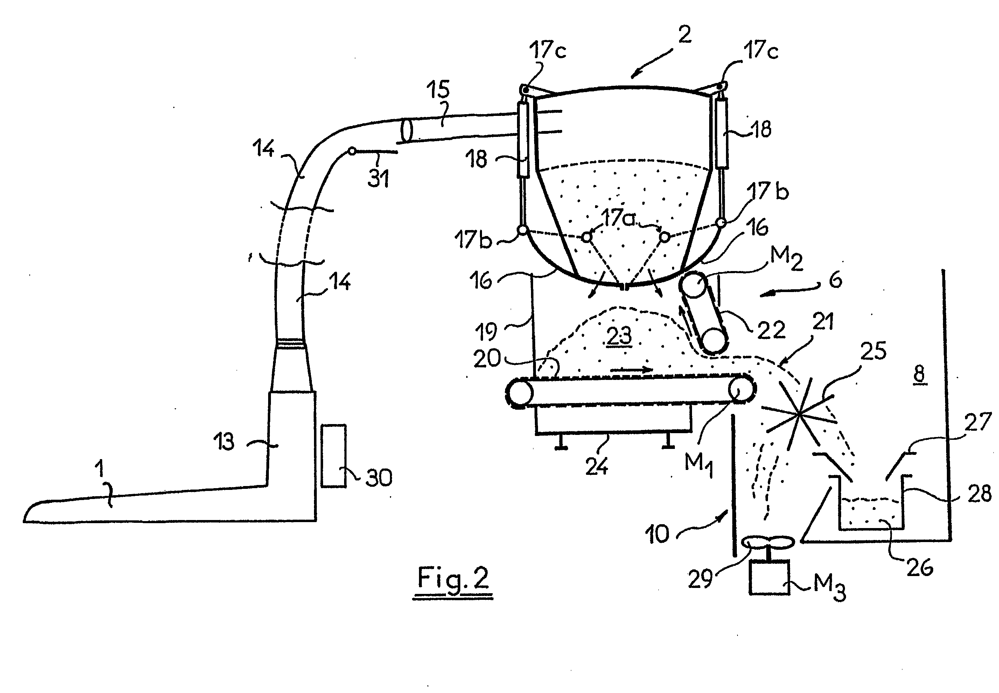

En se référant à la figure 2, l'organe de ramassage-hachage est par exemple sous la forme d'un bec cueilleur 1 pour un ou deux rangs de tout type approprié et le produit cueilli est introduit par des rouleaux d'alimentation (non représentés) dans un hacheur-expulseur 13 relié à un conduit 14 où le produit haché est convoyé pneumatiquement, prolongé par un tuyau souple ou articulé et télescopique 15 jusqu'à la trémie d'attente 2. Cette trémie peut être constituée par un cyclone séparateur et elle est munie de deux trappes d'ouverture16 à sa partie inférieure s'articulant par un jeu de biellettes convenables 17a autour de pivots 17b reliés à un vérin de commande 18 articulé en 17c. Une trémie de pesage 19 disposée au droit des trappes 16 comprend à sa partie inférieure un convoyeur approprié 20 sous la forme d'un tapis continu ou racleur, au-dessus et au voisinage de la sortie 21 duquel est disposé un égalisateur approprié 6 constitué par exemple d'un convoyeur à barrette 22 destiné à repousser le produit 23 contenu dans la trémie 19 du côté opposé à la sortie 21 en direction des trappes 16, de façon que l'épaisseur du produit transporté soit constante en direction de l'ensemble échantillonneur de référence générale 8. Le convoyeur 20 est associé, de façon connue en soi, à un organe de pesage 24 de tout type approprié, par exemple une plate-forme de pesée à affichage numérique.

L'échantillonneur 8 peut consister en un carter de largeur déterminée représentant une fraction de la largeur du convoyeur 20, par exemple 1/10 ou 1/20 selon le type d'échantillonnage choisi. Une roue à palette 25 de largeur déterminée, disposée au-dessous de la sortie 21, est destinée à dériver l'échantillon 26 de produit par l'intermédiaire d'un guide conique 27 dans un réceptacle de conditionnement approprié 28 tel que sac ou boîte. Selon le produit, la roue à palette 25 peut avoir une forme appropriée et être utilisée sans carter pour l'échantillonnage. La sortie d'évacuation de référence générale 10 du produit recueilli peut être munie d'un éparpilleur rotatif 29 ou de tout dispositif approprié de récupération du produit, tel que bande transporteuse ou convoyeur-élévateur (non représenté) débouchant dans un réceptacle ou véhicule convenable.

Bien entendu, les différents organes de la machine sont mûs au moyen de moteurs de tout type approprié et en particulier des moteurs hydrauliques M1, M2, M3 respectivement pour le convoyeur 20, l'égalisateur 22 et l'éparpilleur 29, alimentés par une pompe convenable 30. Par ailleurs, et comme ce sera mieux expliqué ci-après, les différents organes comportent des moyens de réglage à la portée du conducteur ou de l'opérateur.

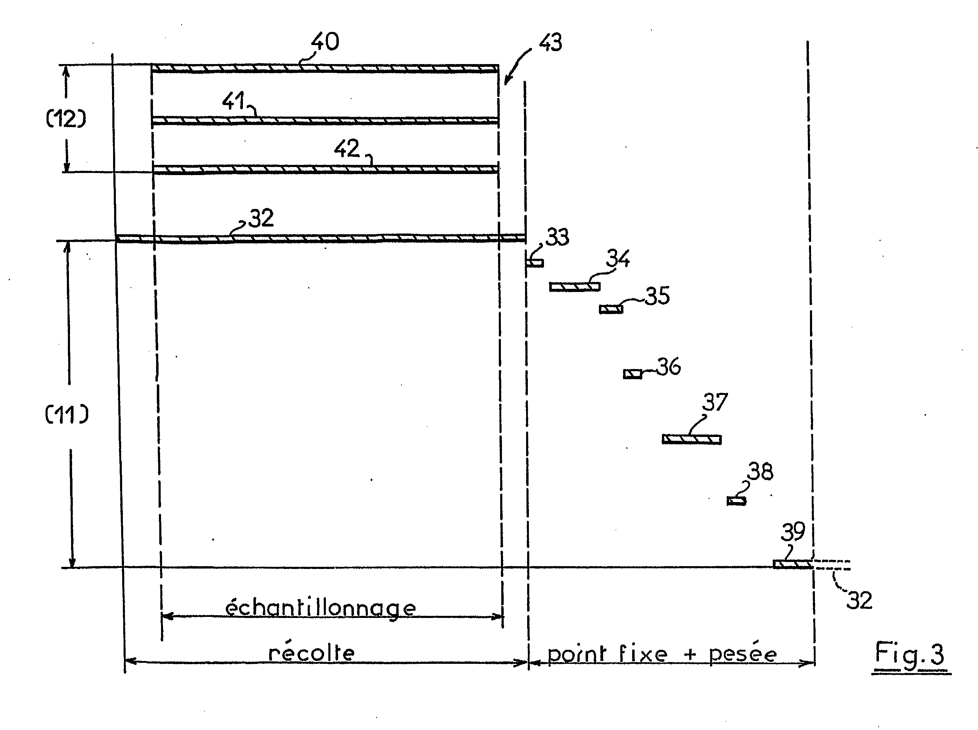

Le cycle de fonctionnement de la récolteuse est illustré dans le tableau de la figure 3 annexée.

Les deux postes de travail fonctionnent simultanément :

a) cycle du poste de conduite (11, fig. 1)
(cas du pesage sur trémie d'échantillonnage)

- récolte avec stockage dans la trémie d'attente: 32
- débrayage en fin de parcelle (33),
- point fixe de 5 à 10 secondes pour vider le circuit de récolte : 34,
- moteur au ralenti,
- pesage comprenant trois phases :
. tarage de la trémie de pesage (point 0) : 35
. ouverture des trappes de la trémie d'attente:36
. pesage et saisie des données : 37
- fermeture des trappes : 38
- embrayage et nouveau cycle de récolte (39).

b) cycle du poste d'échantillonnage (12, fig. 1)
Aussitôt après le début de récolte :
- mise en route du convoyeur (40), de l'égalisateur (41) et de l'échantillonneur 42,
- arrêt de l'ensemble convoyeur-égalisateur et échantillonneur quand la trémie 19 de l'échantillonneur est vide (43)
- conditionnement et étiquetage de l'échantillon.

Indépendamment des réglages réalisés en atelier, les opérateurs peuvent intervenir sur les réglages suivants :
- les réglages du bec cueilleur 1 tels que préconisés par le constructeur ;
. sur le conduit d'éjection 14 du plateau hacheur est placée une trappe 31 permettant de régler le débit d'air et donc la vitesse de l'air dans le cyclone selon la teneur en humidité du produit,
. sur les moteurs d'entraînement, la vitesse de rotation est réglable, commandant ainsi :

1) la vitesse d'avancement du convoyeur, en fonction de la durée de récolte de la parcelle, du volume du produit récolté et de l'épaisseur de la nappe à échantillonner,
2) la vitesse linéaire ou périphérique de l'égalisateur 22, selon le type de produit,
3) la vitesse de rotation du rotor 25 de l'échantillonneur,
4) la vitesse de rotation de l'éparpilleur 29 (force l'éjection) ou la vitesse de translation d'un dispositif convoyeur d'évacuation du produit après échantillonnage ;
sont également réglables :
. la hauteur de l'égalisateur 22 par rapport au convoyeur 20, commandant ainsi l'épaisseur de la nappe de produit à échantillonner,
. la largeur de l'échantillonnage ainsi que l'emplacement de l'échantillonneur par rapport à l'axe du convoyeur.

De manière particulièrement avantageuse, l'ensemble récolteur-peseur comprend un certain nombre de dispositifs d'asservissement afin d'augmenter la fiabilité des opérations et d'éviter en particulier toute fausse manoeuvre expérimentale, à savoir :

1) éviter les mélanges de produits entre deux parcelles successives, par :
. interdiction d'ouverture des trappes 16 commandant la trémie du cyclone si le tapis 20 de la trémie d'échantillonnage est en marche, neutralisation de la commande hydraulique des vérins 18,

. interdiction de récolte (avancement de la récolteuse) si les trappes 16 sont ouvertes ou mal fermées: signal sonore commandé par pédale d'embrayage ou tout autre moyen,

2) éviter l'absence de pesée, en particulier par vidange prématurée de la trémie de pesage 19 par:
. interdiction du mettre en marche les moteurs du tapis convoyeur 20 et de l'égalisateur 22 si les trappes 16 sont ouvertes,
. et interdiction réciproque d'ouvrir les trappes 16 si le tapis convoyeur 20 est en marche

3) éviter éventuellement l'accumulation du produit sous la machine (bourrage de la sortie d'évacuation) lors d'un arrêt de la récolteuse en cours de cycle (incident de récolte) : les moteurs M1 et M2 sont asservis à l'avancement au niveau de l'embrayage ou par tout autre moyen.

Un dispositif d'arrêt d'urgence est à la disposition de l'opérateur arrière. Ce dispositif arrête les moteurs M1 - M2 et M3, neutralise les vérins 18 des trappes et déclenche un signal sonore destiné au chauffeur ou tout autre moyen neutralisant l'avancement de la récolteuse. Un signal sonore de tonalité différente permet par ailleurs au chauffeur et à l'opérateur arrière de communiquer entre eux.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre.

## Revendications

1. Récolteuse pour parcelles expérimentales, montée sur un véhicule automoteur, munie d'un organe (1) de ramassage-hachage tel qu'un bec cueilleur, ledit organe (1) formant un premier module, et d'un moyen de pesage associé à une trémie et faisant partie d'un second module, caractérisée en ce que ce second module est aussi conçu pour l'échantillonnage de produit recueilli, étant relié audit premier module (1) par l'intermédiaire d'un conduit d'éjection (14) et de la trémie, laquelle est une trémie d'attente ouvrante (2) dont la sortie (16) est disposée au droit d'un convoyeur (5, 20) associé au moyen de pesage (7, 24) et à un égalisateur (6, 22) destiné à rendre constante l'épaisseur de la charge que transporte ledit convoyeur, dont la sortie (21) débouche sur un ensemble échantillonneur (8, 25–28) associé à un poste de conditionnement (9) d'échantillons (26) et à une sortie (10) destinée à l'évacuation du produit recueilli et non utilisé pour les échantillons, ledit ensemble échantillonneur comprenant une roue à palette (25) disposée au-dessous de la sortie (21) dudit convoyeur (20) et destinée à dériver à partir du flot de produit recueilli se dirigeant vers la sortie d'évacuation des échantillons, qui sont dirigés par cette roue vers la poste de conditionnement.

2. Récolteuse selon la revendication 1, caractérisée par le fait qu'un premier poste de commande (11) est relié au dispositif de mise en progression du véhicule ainsi qu'à la trémie ouvrante (2) et au moyen de pesage (7, 24), un second poste de commande étant relié au convoyeur (5, 20), à l'égalisateur (6, 22) et à l'échantillonneur (8, 25–28).

3. Récolteuse selon l'une des revendications 1 ou 2, caractérisée par le fait que la trémie d'attente (2) est constituée par un cyclone séparateur et qu'elle est munie à sa partie inférieure de trappes d'ouverture (16) reliées à des vérins de commande (18).

4. Récolteuse selon l'une quelconque des revendications 1 à 3, caractérisée par le fait que le moyen de pesage (7, 24) est constitué par une plateforme de pesée associée au tapis dudit convoyeur.

5. Récolteuse selon l'une quelconque des revendications 1 à 4, caractérisée par le fait que l'égalisateur (6, 22) est destiné à rendre constante et réglable l'épaisseur de la charge qu'il transporte en repoussant le produit transporté par le convoyeur (5, 20) en direction des trappes d'ouverture (16) de la trémie d'attente, de sorte que ladite épaisseur soit constante en direction de l'échantillonneur.

6. Récolteuse selon l'une quelconque des revendications 1 à 5, caractérisée par le fait que l'ensemble échantillonneur comprend un carter de largeur déterminée représentant une fraction de la largeur du convoyeur (5, 20) ainsi que ladite roue à palette (25), destinée à dériver des échantillons (26) dans un réceptacle de conditionnement (28), par rapport à la sortie d'évacuation (10) du produit recueilli.

7. Récolteuse selon la revendication 6, caractérisée par le fait que la roue à palette (25) est de forme appropriée à l'échantillonnage, disposée au-dessous de la sortie (21) du convoyeur (5, 20).

8. Récolteuse selon l'une quelconque des revendications 1 à 7, caractérisée par le fait que la sortie d'évacuation (10) du produit recueilli est munie d'un dispositif de récupération tel qu'un éparpilleur (29) ou un convoyeur-élévateur.

9. Récolteuse selon l'une quelconque des revendications 1 à 8, caractérisée par le fait que le convoyeur, l'égalisateur et le dispositif de récupération comportent chacun un moteur (M1, M2, M3) reliés à un poste de commande (12).

10. Récolteuse selon la revendication 9, caractérisée par le fait que les moteurs (M1 à M3) sont asservis à la commande de progression du véhicule.

## Claims

1. Harvester for growing-on plots, mounted on an automotive vehicle, equipped with a harvesting/chopping member (1), such as a harvesting head, the said member (1) forming a first module, and with a weighing means associated with a hopper and forming part of a second module, characterized in that this second module is also designed for sampling the product collected, being linked to the said first module (1) via an ejection duct (14) and the hopper, which is an opening stand-by hopper (2) whose outlet (16) is arranged at right angles to a conveyor (5, 20) associated with the weighing means (7, 24) and with an equalizer (6, 22) intended to render constant the thickness of the charge transported by the said conveyor, the outlet (21) of which opens onto a sampling assembly (8, 25–28) associated with a station (9) for conditioning samples (26) and with an outlet (10) intended for discharging the product collected and not used for the samples, the said sampling assembly comprising a vane wheel (25) arranged above the outlet (21) of the said conveyor (20) and intended to divert samples from the flow of product collected travelling towards the discharging outlet, which samples are directed by this wheel towards the conditioning station.

2. Harvester according to Claim 1, characterized by the fact that a first control station (11) is linked to the device for advancing the vehicle and to the opening hopper (2) and to the weighing means (7, 24), a second control station being linked to the conveyor (5, 20), to the equalizer (6, 22) and to the sampler (8, 25–28).

3. Harvester according to either of Claims 1 or 2, characterized by the fact that the stand-by hopper (2) is formed by a cyclone separator and that it is equipped on its lower part with opening flaps (16) linked to control cylinders (18).

4. Harvester according to any one of Claims 1 to 3, characterized by the fact that the weighing means (7, 24) is formed by a weighing platform associated with the belt of the said conveyor.

5. Harvester according to any one of Claims 1 to 4, characterized by the fact that the equalizer (6, 22) is intended to render constant and adjustable the thickness of the charge which it is transporting, by pushing back the product transported by the conveyor (5, 20) in the direction of the opening flaps (16) of the stand-by hopper, in such a way that the said thickness is constant in the direction of the sampler.

6. Harvester according to any one of Claims 1 to 5, characterized by the fact that the sampling assembly comprises a box of given width, representing a fraction of the width of the conveyor (5, 20), and the said vane wheel (25) intended to divert samples (26) into a conditioning receptacle (28) relative to the discharge outlet (10) for the product collected.

7. Harvester according to Claim 6, characterized by the fact that the vane wheel (25) is of a form appropriate for sampling, arranged above the outlet (21) of the conveyor (5, 20).

8. Harvester according to any of Claims 1 to 7, characterized by the fact that the discharge outlet (10) for the product collected is equipped with a recovery device such as a spreader (29) or a conveyor/elevator.

9. Harvester according to any one of Claims 1 to 8, characterized by the fact that the conveyor, the equalizer and the recovery device each comprise a motor (M1, M2, M3) linked to a control station (12).

10. Harvester according to Claim 9, characterized by the fact that the motors (M1 to M3) are controlled by the vehicle advance control unit.

**Patentansprüche**

1. Erntemaschine für Versuchsparzellen, auf dem Kraftfahrzeug aufgebaut, versehen mit einem Sammel- und Häckselorgan (1) wie z.B. einem Sammelarm, wobei das genannte Organ (1) einen ersten Modul bildet, und mit einer Wiegeeinrichtung in Verbindung mit einem Trichter, die zu einem zweiten Modul gehört, dadurch gekennzeichnet, daß dieser zweite Modul auch für die Probenahme des eingesammelten Erzeugnisses ausgelegt ist, wobei dieser mit dem ersten Modul (1) über eine Ausstoßleitung (14) und den Trichter verbunden ist, bei dem es sich um einen sich öffnenden Trichter (2) handelt, dessen Auslauf (16) in Höhe eines Förderers (5, 20) angeordnet ist, der mit der Wiegeeinrichtung (7, 24) und einer Egalisiervorrichtung (6, 22) verbunden ist, wodurch die Dicke der vom genannten Förderer transportierten Schicht konstant gehalten werden soll und deren Auslauf (21) in einer Probenahmeeinheit (8, 25–28) einmündet, die mit einer Station (9) zur Aufbereitung von Proben (26) sowie mit einem Auslauf (10) verbunden ist, der für die Austragung des gesammelten Erzeugnisses, soweit es nicht für die Probenahme benötigt wird, vorgesehen ist, wobei die genannte Probenahmeeinheit ein Palettenrad (25) enthält, welches unterhalb des Auslaufs (21) des genannten Förderers (20) angeordnet und dazu bestimmt ist, dem in Richtung auf die Austragseite strömenden Produkt Proben zu entnehmen, die durch dieses Rad der Aufbereitungsstation zugeführt werden.

2. Erntemaschine nach Anspruch 1, dadurch gekennzeichnet, daß eine erste Steuerstation (11) mit der Progressionsvorrichtung (dispositif de mise en progression) des Fahrzeuges sowie mit dem sich öffnenden Trichter (2) und der Wiegeeinrichtung (7, 24) verbunden ist, während eine zweite Steuerstation mit dem Förderer (5, 20) der Egalisiereinrichtung (6, 22) und der Probenahmevorrichtung (8, 25–28) verbunden ist.

3. Erntemaschine nach einem der Ansprüche 1 oder 2, dadurch gekennzeichnet, daß der Aufgabetrichter (2) aus einem Abscheidezyklon besteht und am unteren Teil mit Öffnungsklappen (16) versehen ist, die mit Steuerzylindern (18) verbunden sind.

4. Erntemaschine nach einem der Ansprüche 1 bis 3, dadurch gekennzeichnet, daß die Wiegeeinrichtung (7, 24) aus einer mit der Oberseite des genannten Förderers in Verbindung stehenden Wiegeplattform besteht.

5. Erntemaschine nach einem der Ansprüche 1 bis 4, dadurch gekennzeichnet, daß die Egalisiervorrichtung (6, 22) dazu bestimmt ist, die Dicke der jeweils transportierten Schicht konstant zu halten und veränderbar zu machen, indem das mit dem Förderer (5, 20) transportierte Produkt in Richtung der Öffnungsklappen (16) des Aufgabetrichters geschoben wird, so daß die genannte Schichtdicke in Richtung der Probenahmevorrichtung konstant bleibt.

6. Erntemaschine nach einem der Ansprüche 1 bis 5, dadurch gekennzeichnet, daß die Probenahmeeinheit ein Gehäuse von festgelegter Breite enthält, die einem Teil der Breite des Förderers (5, 20) entspricht, sowie das genannte Palettenrad (25), welches dazu bestimmt ist, in einem Aufbereitungsbehältnis (28) Proben (26) an der Austragöffnung (10) des eingesammelten Produkts zu nehmen.

7. Erntemaschine nach Anspruch 6, dadurch gekennzeichnet, daß das Palettenrad (25) eine für die Probenahme geeignete Form hat und unterhalb des Austritts (21) des Förderers (5, 20) angeordnet ist.

8. Erntemaschine nach einem der Ansprüche 1 bis 7, dadurch gekennzeichnet, daß die Austragöffnung (10) für das eingesammelte Produkt mit einer Rückgewinnungsvorrichtung wie z.B. einem Breitstreuer (29) oder einem Hubförderer versehen ist.

9. Erntemaschine nach einem der Ansprüche 1 bis 8, dadurch gekennzeichnet, daß der Förderer, die Egalisiervorrichtung und die Rückgewinnungsvorrichtung jeweils einen mit einer Steuerstation (12) verbundenen Motor (M1, M2, M3) besitzen.

10. Erntemaschine nach Anspruch 9, dadurch gekennzeichnet, daß die Motoren (M1–M3) von der Fahrzeugprogressionssteuerung geregelt werden.

Fig.1

Fig.2

échantillonnage

récolte

point fixe + pesée

Fig.3

EP 0 193 898 B1